# EUROPEAN PATENT APPLICATION

(11) **EP 4 152 460 A1**
(43) Date of publication of application: **22.03.2023**
(21) Application number: 21805091.2
(22) Date of filing: 11.05.2021
(51) Int. Cl.: H01M 10/052, H01M 10/058, H01M 50/109, H01M 50/153

(54) **SECONDARY BATTERY AND MANUFACTURING METHOD THEREOF**

(30) Priority: 13.05.2020 JP 2020084682
(71) Applicant: Murata Manufacturing Co., Ltd., Nagaokakyo-shi, Kyoto 617-8555 (JP)
(72) Inventor: KITAMURA, Toyofumi, Nagaokakyo-shi, Kyoto 617-8555 (JP)
(74) Representative: Reeve, Nicholas Edward
(86) International application number: PCT/JP2021/017937
(87) International publication number: WO 2021/230250

(57) **Abstract**

Provided is a secondary battery including an electrode assembly and an exterior body housing the electrode assembly. In the secondary battery, the exterior body includes a cup-shaped exterior member and a lid-shaped exterior member connected to each other by a welded part. An end part of at least one of the cup-shaped exterior member and the lid-shaped exterior member includes a stepped part on an inner surface. The stepped part includes a first extending surface and a second extending surface extending in substantially the same direction and having different heights from each other, and a stepped surface connecting the two extending surfaces. The welded part is provided so as to include a part of the stepped part provided at an end part of the at least one exterior member and an end part of the other exterior member. The stepped surface of the stepped part and the other exterior member are separated from each other.

## Description

### TECHNICAL FIELD

The present invention relates to a secondary battery and a method for manufacturing the same. In particular, the present invention relates to a method for manufacturing a secondary battery including an electrode assembly including a positive electrode, a negative electrode, and a separator, and also relates to a secondary battery obtained by the manufacturing method.

### BACKGROUND ART

A secondary battery can be repeatedly charged and discharged because the secondary battery is a so-called "storage battery", and is used for various applications. For example, the secondary battery is used for mobile devices such as mobile phones, smart phones, and laptop computers.

### PRIOR ART DOCUMENT

### PATENT DOCUMENTS

Patent Document 1: Japanese Patent Application Laid-Open No. 08-315790
Patent Document 2: Japanese Patent Application Laid-Open No. 10-156564
Patent Document 3: Japanese Patent Application Laid-Open No. 2013-237102
Patent Document 4: Japanese Patent Application Laid-Open No. 2015-163412
Patent Document 5: Japanese Patent Application Laid-Open No. 2015-176784
Patent Document 6: Japanese Patent Application Laid-Open No. 2019-123008

### SUMMARY OF THE INVENTION

### Problem to be solved by the invention

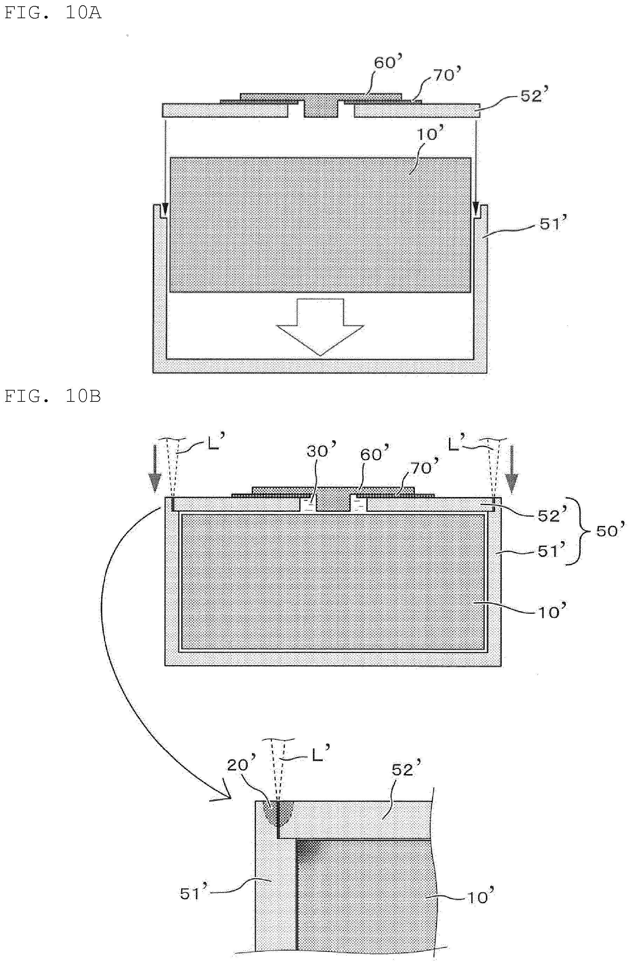

The present inventors have noticed that there is a problem to be overcome in conventional secondary batteries and have found a necessity to solve the problem. Specifically, the present inventors have found that there is the following problem (see FIGS. 10A and 10B).

The secondary battery includes an electrode assembly 10' including a positive electrode, a negative electrode, and a separator therebetween, and an exterior body 50' enclosing the electrode assembly 10'. The exterior body 50' of the secondary battery includes, for example, two exterior members (a cup-shaped member and a lid-shaped member) connected to each other by a welded part 20'. The welded part 20' can be formed, for example, by providing a lid-shaped exterior member 52' such that the lid-shaped exterior member 52' is in contact with the cup-shaped exterior member 51', and irradiating the contact portion with a laser L'.

In this regard, when the welded part 20' is formed by the irradiation of the laser L', irradiation heat of the laser L' is transferred to the electrode assembly 10' located inside the exterior body 50'. The irradiation heat may cause thermal damage such as partial baking of the electrode assembly 10'. In particular, a small-sized coin-type secondary battery may make it necessary to reduce a clearance between the electrode assembly 10' and the exterior body 50' from the viewpoint of improving a volume energy density, and thus the thermal damage may become more remarkable.

The present invention has been made in view of the above problem. That is, a main object of the present invention is to provide a secondary battery capable of avoiding thermal damage to an electrode assembly located inside an exterior body due to irradiation heat of a laser used when the exterior body is produced, and a method for manufacturing the same.

### Means for solving the problem

To achieve the above object, an embodiment of the present invention provides a secondary battery including: an electrode assembly; and an exterior body housing the electrode assembly, wherein the exterior body includes a cup-shaped exterior member and a lid-shaped exterior member connected to each other by a welded part, an end part of at least one of the cup-shaped exterior member and the lid-shaped exterior member includes a stepped part on an inner surface, the stepped part includes a first extending surface and a second extending surface extending in substantially the same direction and having different heights from each other, and a stepped surface connecting the two extending surfaces, the welded part is provided so as to include a part of the stepped part provided at an end part of the at least one exterior member and an end part of the other exterior member, and the stepped surface of the stepped part and the other exterior member are separated from each other.

In order to achieve the above object, an embodiment of the present invention provides a method for manufacturing a secondary battery, the method including the steps of: providing an electrode assembly in a cup-shaped exterior member; injecting an electrolytic solution into the cup-shaped exterior member; providing a lid-shaped exterior member so as to cover a cavity of the cup-shaped exterior member; and irradiating a portion where the cup-shaped exterior member and the lid-shaped exterior member face each other with a laser to form a welded part, wherein at least one of the cup-shaped exterior member and the lid-shaped exterior member used includes a stepped part on an inner surface, and the stepped part includes a first extending surface and a second extending surface extending in substantially the same direction and having different heights from each other, and a stepped surface connecting the two extending surfaces, and in the formation of the welded part, the portion is irradiated with the laser such that the stepped surface of the stepped part and the other exterior member are separated from each other.

### Advantageous effect of the invention

An embodiment of the present invention makes it possible to avoid thermal damage to an electrode assembly located inside an exterior body due to irradiation heat of a laser used when the exterior body is produced.

### BRIEF EXPLANATION OF DRAWINGS

FIG. 1A is a schematic sectional view showing the configuration of a secondary battery according to an embodiment of the present invention (a cup-shaped exterior member including a stepped part, a lid-shaped exterior member including a stepped part).
FIG. 1B is a schematic sectional view showing the configuration of a secondary battery according to an embodiment of the present invention (a cup-shaped exterior member including no stepped part, a lid-shaped exterior member including a stepped part).
FIG. 1C is a schematic sectional view showing the configuration of a secondary battery according to an embodiment of the present invention (a cup-shaped exterior member including a stepped part, a lid-shaped exterior member including a stepped part).
FIG. 2 is a schematic perspective view showing the specific configuration of a secondary battery according to an embodiment of the present invention.
FIG. 3 is a schematic sectional view showing an aspect in which both a positive electrode tab and a negative electrode tab are extended to a lid-shaped exterior member side.
FIG. 4 is a schematic sectional view showing the preferred configuration of a secondary battery according to an embodiment of the present invention.
FIG. 5 is a schematic sectional view showing the configuration of a secondary battery according to another embodiment of the present invention.
FIG. 6 is a schematic sectional view showing the specific configuration of a secondary battery according to another embodiment of the present invention.
FIG. 7 is a schematic sectional view showing the preferred configuration of a secondary battery according to another embodiment of the present invention.
FIG. 8A is a schematic sectional view showing a method for manufacturing a secondary battery according to an embodiment of the present invention (a step of installing an electrode assembly on a cup-shaped exterior member).
FIG. 8B is a schematic sectional view showing a method for manufacturing a secondary battery (electrolytic solution injecting step) according to an embodiment of the present invention.
FIG. 8C is a schematic sectional view showing a method for manufacturing a secondary battery (a step of installing a lid-shaped member) according to an embodiment of the present invention.
FIG. 8D is a schematic sectional view showing a method for manufacturing a secondary battery (a step of forming a welded part using laser irradiation) according to an embodiment of the present invention.
FIG. 9 is a sectional view schematically showing an electrode configuration layer (FIG. 9(A): a planar stacked structure, FIG. 9(B): a wound structure).
FIG. 10A is a schematic sectional view for describing a technical problem of the present application (conventional technique).
FIG. 10B is a schematic sectional view for describing a technical problem of the present application (conventional technique).

### MODE FOR CARRYING OUT THE INVENTION

Hereinafter, a secondary battery according to an embodiment of the present invention will be described in more detail. Although the description will be made with reference to the drawings as necessary, various elements in the drawings are merely schematically and exemplarily shown for understanding of the present invention, and the appearance and the dimensional ratio and the like can be different from those of an actual secondary battery.

The term "sectional view" directly or indirectly described in the present description is based on a virtual cross section obtained by cutting the secondary battery along the height direction. The terms "vertical direction" and "horizontal direction" directly or indirectly used in the present description respectively correspond to a vertical direction and a horizontal direction in the drawings. Unless otherwise specified, the same reference signs or symbols denote the same members or parts, or the same semantic contents. In a suitable aspect, when the stacking direction of an electrode assembly can correspond to the vertical direction, it can be understood that a vertical downward direction (that is, a direction in which gravity acts) corresponds to the term "downward direction" and the opposite direction corresponds to the term "upward direction".

### [Basic Configuration of Secondary Battery]

The term "secondary battery" as used in the present description refers to a battery which can be repeatedly charged and discharged. Therefore, the secondary battery according to the present invention is not excessively limited by its name, and for example, the term "electric storage device" and the like can also be included in the subject of the present invention.

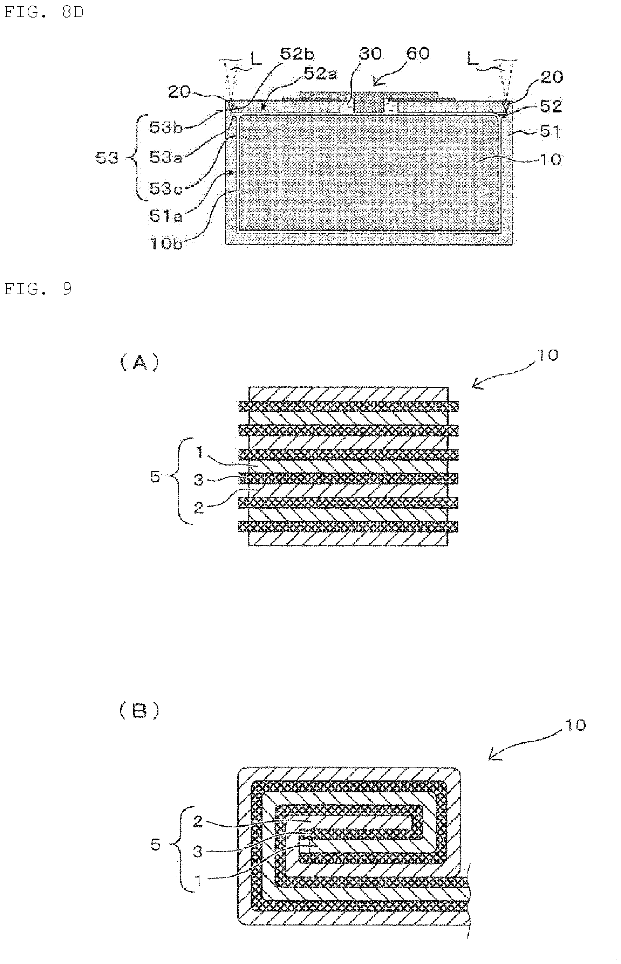

The secondary battery according to an embodiment of the present invention includes an electrode assembly formed by stacking electrode configuration layers including a positive electrode, a negative electrode, and a separator. FIGS. 9(A) and 9(B) illustrate an electrode assembly 10. As illustrated, a positive electrode 1 and a negative electrode 2 are stacked with a separator 3 interposed therebetween to form an electrode configuration layer 5, and at least one or more of the electrode configuration layers 5 are stacked to configure the electrode assembly. FIG. 9(A) shows a planar stacked structure in which the electrode configuration layers 5 are stacked in a planar shape without being wound. Meanwhile, FIG. 9(B) shows a wound stacked structure in which the electrode configuration layer 5 is wound in a wound shape. That is, FIG. 9(B) shows a wound structure in which an electrode configuration layer including a positive electrode, a negative electrode, and a separator disposed between the positive electrode and the negative electrode is wound in a roll shape. In the secondary battery, such an electrode assembly is enclosed in an exterior body together with an electrolyte (for example, a nonaqueous electrolyte). The structure of the electrode assembly is not necessarily limited to the planar stacked structure or the wound structure. For example, the electrode assembly may have a so-called stack-and-folding type structure in which a positive electrode, a separator, and a negative electrode are stacked on a long film and then folded.

The positive electrode is composed of at least a positive electrode material layer and a positive electrode current collector. In the positive electrode, a positive electrode material layer is provided on at least one side of the positive electrode current collector, and the positive electrode material layer contains a positive electrode active material as an electrode active material. For example, in the plurality of positive electrodes in the electrode assembly, the positive electrode material layer may be provided on each of both surfaces of the positive electrode current collector, or may be provided only on one surface of the positive electrode current collector.

The negative electrode is composed of at least a negative electrode material layer and a negative electrode current collector. In the negative electrode, a negative electrode material layer is provided on at least one surface of the negative electrode current collector, and the negative electrode material layer contains a negative electrode active material as an electrode active material. For example, in the plurality of negative electrodes in the electrode assembly, the negative electrode material layer may be provided on each of both surfaces of the negative electrode current collector, or may be provided only on one surface of the negative electrode current collector.

The electrode active material contained in the positive electrode and the negative electrode, that is, the positive electrode active material and the negative electrode active material are substances directly involved in the transfer of electrons in the secondary battery, and are main substances of the positive and negative electrodes which are responsible for charging and discharging, that is, a battery reaction. More specifically, ions are generated in the electrolyte by the "positive electrode active material contained in the positive electrode material layer" and the "negative electrode active material contained in the negative electrode material layer", and the ions move between the positive electrode and the negative electrode and the electrons are transferred, whereby charging and discharging are performed. The positive electrode material layer and the negative electrode material layer are particularly preferably layers capable of occluding and releasing lithium ions. That is, the secondary battery according to the present invention is preferably a nonaqueous electrolyte secondary battery in which lithium ions move between a positive electrode and a negative electrode via a nonaqueous electrolyte, to charge and discharge the battery. When lithium ions are involved in charging and discharging, the secondary battery according to the present invention corresponds to a so-called "lithium ion battery", and the positive electrode and the negative electrode include a layer capable of occluding and releasing lithium ions.

The positive electrode active material of the positive electrode material layer contains, for example, a granular material, and it is preferable that a binder be contained in the positive electrode material layer in order to maintain a sufficient contact between grains and the shape of the grains. Furthermore, a conductive auxiliary agent may be contained in the positive electrode material layer in order to facilitate transmission of electrons promoting the battery reaction. Similarly, when the negative electrode active material of the negative electrode material layer contains, for example, a granular material, a binder is preferably contained in order to maintain a sufficient contact between grains and the shape of the grains, and a conductive auxiliary agent may be contained in the negative electrode material layer in order to facilitate transmission of electrons promoting the battery reaction. As described above, since a plurality of components are contained, the positive electrode material layer and the negative electrode material layer can also be referred to as "positive electrode mixture layer" and "negative electrode mixture layer", respectively.

It is preferable that the positive electrode active material be a material contributing to occlusion and release of lithium ions. From these viewpoints, it is preferable that the positive electrode active material be, for example, a lithium-containing composite oxide. More specifically, it is preferable that the positive electrode active material is a lithium transition metal composite oxide which contains lithium and at least one transition metal selected from the group consisting of cobalt, nickel, manganese, and iron. That is, in the positive electrode material layer of the secondary battery according to the present invention, the lithium transition metal composite oxide is preferably contained as the positive electrode active material. For example, the positive electrode active material may be lithium cobaltate, lithium nickelate, lithium manganate, lithium iron phosphate, or materials in which a part of the transition metal of these is substituted with another metal. The positive electrode active material may be contained singly or two or more kinds thereof may be contained in combination.

The binder which can be contained in the positive electrode material layer is not particularly limited, but examples thereof include at least one selected from the group consisting of polyvinylidene fluoride, a vinylidene fluoride-hexafluoropropylene copolymer, a vinylidene fluoride-tetrafluoroethylene copolymer, and polytetrafluoroethylene and the like. The conductive auxiliary agent which can be contained in the positive electrode material layer is not particularly limited, but examples thereof include at least one selected from carbon blacks such as thermal black, furnace black, channel black, ketjen black, and acetylene black; carbon fibers such as graphite, carbon nanotube, and vapor-grown carbon fiber; metal powders such as copper, nickel, aluminum, and silver; and polyphenylene derivatives.

It is preferable that the negative electrode active material be a material contributing to occlusion and release of lithium ions. From this viewpoint, as the negative electrode active material, for example, various carbon materials, oxides, and/or lithium alloys are preferred.

Examples of the various carbon materials for the negative electrode active material include graphite (natural graphite and artificial graphite), hard carbon, soft carbon, and diamond-like carbon. Particularly, graphite has high electron conductivity and excellent adhesiveness to the negative electrode current collector. Examples of the oxide of the negative electrode active material include at least one selected from the group consisting of silicon oxide, tin oxide, indium oxide, zinc oxide, and lithium oxide and the like. The lithium alloy of the negative electrode active material may be any metal as long as the metal can be alloyed with lithium, and the lithium alloy may be, for example, a binary, ternary or higher alloy of a metal such as Al, Si, Pb, Sn, In, Bi, Ag, Ba, Ca, Hg, Pd, Pt, Te, Zn or La and lithium. It is preferable that the structural form of the oxide be amorphous. This is because degradation due to nonuniformity such as grain boundaries or defects is less likely to be caused.

The binder which can be contained in the negative electrode material layer is not particularly limited, but examples thereof include at least one kind selected from the group consisting of styrene-butadiene rubber, polyacrylic acid, polyvinylidene fluoride, polyimide-based resin, and polyamideimide-based resin. For example, the binder contained in the negative electrode material layer may be a styrene butadiene rubber. The conductive auxiliary agent which can be contained in the negative electrode material layer is not particularly limited, but examples thereof include at least one selected from carbon blacks such as thermal black, furnace black, channel black, ketjen black, and acetylene black; carbon fibers such as graphite, carbon nanotube, and vapor-grown carbon fiber; metal powders such as copper, nickel, aluminum, and silver; and polyphenylene derivatives. The negative electrode material layer may contain a component caused by a thickener component (for example, carboxymethyl cellulose) used at the time of manufacturing the battery.

The positive electrode current collector and the negative electrode current collector used for the positive electrode and the negative electrode are members which contribute to the collection and supply of electrons generated in the active material by the battery reaction. Such a current collector may be a sheet-like metal member and may be in a porous or perforated form. For example, each of the current collectors may be a metal foil, a punching metal, a net, an expanded metal, and the like. The positive electrode current collector used for the positive electrode preferably contains a metal foil containing at least one selected from the group consisting of aluminum, stainless steel, and nickel and the like, and may be, for example, an aluminum foil. Meanwhile, the negative electrode current collector used for the negative electrode preferably contains a metal foil containing at least one selected from the group consisting of copper, stainless steel, and nickel and the like, and may be, for example, a copper foil.

The separator used for the positive electrode and the negative electrode is a member provided from the viewpoints of the prevention of short circuit due to contact between the positive and negative electrodes and the holding of the electrolyte and the like. In other words, it can be said that the separator is a member which allows ions to pass while preventing electronic contact between the positive and negative electrodes. Preferably, the separator is a porous or microporous insulating member and has a film form due to its small thickness. Although it is merely an example, a microporous membrane made of polyolefin may be used as the separator. In this respect, the microporous membrane used as the separator may contain, for example, only polyethylene (PE) or only polypropylene (PP) as polyolefin. Furthermore, the separator may be a stacked body composed of "a microporous membrane made of PE" and "a microporous membrane made of PP". The surface of the separator may be covered with an inorganic grain coating layer, an adhesive layer, and the like. The surface of the separator may have adhesiveness. In the present invention, the separator should not be limited, particularly by its name, and may be a solid electrolyte, a gel electrolyte, or an insulating inorganic grain or the like, which has a similar function.

In the secondary battery according to an embodiment of the present invention, an electrode assembly including an electrode configuration layer including a positive electrode, a negative electrode, and a separator is enclosed in an exterior body together with an electrolyte. When the positive electrode and the negative electrode include a layer capable of occluding and releasing lithium ions, the electrolyte is preferably "a nonaqueous-based" electrolyte such as an organic electrolyte or an organic solvent. That is, the electrolyte is preferably a nonaqueous electrolyte. In the electrolyte, metal ions released from electrodes (positive and negative electrodes) are present, and thus the electrolyte helps the transfer of metal ions in the battery reaction.

The nonaqueous electrolyte is an electrolyte containing a solvent and a solute. A specific solvent for the nonaqueous electrolyte may be a solvent containing at least a carbonate. The carbonates may be cyclic carbonates and/or chain carbonates. Although not particularly limited, examples of the cyclic carbonates include at least one kind selected from the group consisting of propylene carbonate (PC), ethylene carbonate (EC), butylene carbonate (BC), and vinylene carbonate (VC). Examples of the chain carbonates include at least one kind selected from the group consisting of dimethyl carbonate (DMC), diethyl carbonate (DEC), ethyl methyl carbonate (EMC), and dipropyl carbonate (DPC). Although it is merely an example, a combination of cyclic carbonates and chain carbonates may be used as the nonaqueous electrolyte, and, for example, a mixture of ethylene carbonate and diethyl carbonate may be used. As a specific solute for the nonaqueous electrolyte, for example, Li salts such as LiPF₆ and/or LiBF₄ may be used.

The exterior body of the secondary battery is a member enclosing an electrode assembly formed by stacking electrode configuration layers including a positive electrode, a negative electrode, and a separator. The exterior body may be composed of a metal such as stainless steel (SUS) or aluminum.

### [Characteristic Portion of The Present Invention]

### (Method for Manufacturing Secondary Battery of The Present Invention)

Hereinafter, a characteristic portion of the present invention will be described. From the viewpoint of promoting the understanding of the contents of the present invention, first, a method for manufacturing a secondary battery according to an embodiment of the present invention will be described, and a secondary battery obtained by the manufacturing method will be then described. From the viewpoint of avoiding redundant description, an overlapping portion between the specific feature portion of the method for manufacturing a secondary battery according to an embodiment of the present invention and the specific feature portion of a secondary battery according to an embodiment of the present invention obtained by the method will be described in the section of the secondary battery according to an embodiment of the present invention described later.

The present inventors have intensively studied a solution for avoiding thermal damage to an electrode assembly located inside an exterior body due to irradiation heat of a laser used when the exterior body is produced. As a result, the present inventors have devised a method for manufacturing a secondary battery according to an embodiment of the present invention.

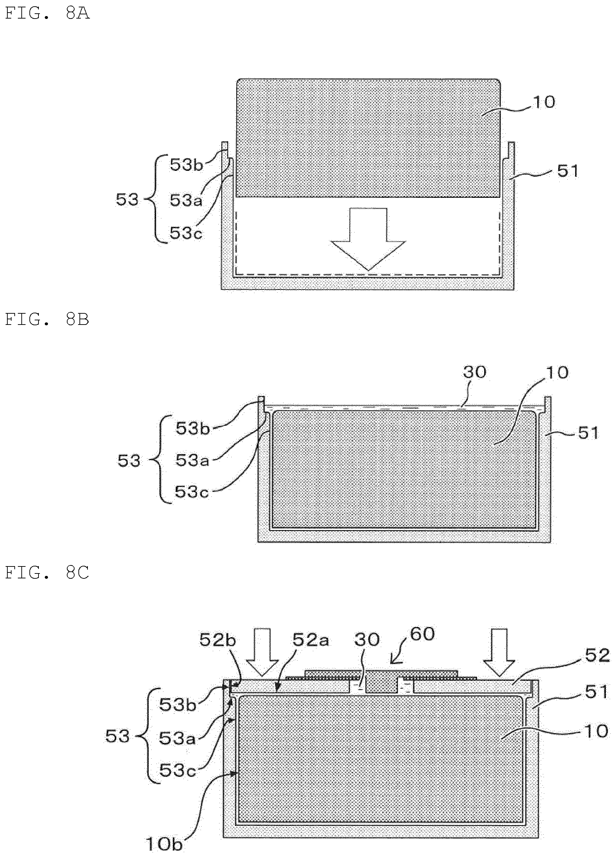

The method for manufacturing a secondary battery according to an embodiment of the present invention roughly includes the following steps (i) to (iv) in order:
(i) a step of providing an electrode assembly 10 in a cup-shaped exterior member 51 (see FIG. 8A);
(ii) a step of injecting an electrolytic solution 30 into the cup-shaped exterior member 51 (see FIG. 8B);
(iii) a step of providing a lid-shaped exterior member 52 so as to cover a cavity of the cup-shaped exterior member 51 (FIG. 8C); and
(iv) a step of irradiating a portion where the cup-shaped exterior member 51 and the lid-shaped exterior member 52 face each other with a laser L to form a welded part 20 (see FIG. 8D).

The method for manufacturing a secondary battery according to an embodiment of the present invention including the above steps has the following technical features.

First, in an embodiment of the present invention, as at least one of the cup-shaped exterior member 51 and the lid-shaped exterior member 52, a member including a stepped part 53 on an inner surface is used. The stepped part 53 includes a first extending surface 53b and a second extending surface 53c extending in substantially the same direction and having different heights from each other, and a stepped surface 53a connecting the two extending surfaces 53b and 53c. The stepped surface 53a can take a form such as a horizontal surface or an inclined surface in sectional view.

That is, in an embodiment of the present invention, the stepped part 53 can be formed only in the cup-shaped exterior member 51, the stepped part 53 can be formed only in the lid-shaped exterior member 52, or the stepped part 53 can be formed in both the cup-shaped exterior member 51 and the lid-shaped exterior member 52. As an example, it is preferable to provide the stepped part 53 in the inner surface of the cup-shaped exterior member 51 in consideration of the irradiation of the laser L in a vertically downward direction later.

When the stepped part 53 is provided in the cup-shaped exterior member 51, typically, the battery is irradiated with the laser L in the vertical direction of the battery (see FIG. 8D). Consequently, the lid can be appropriately welded even in a deformed battery (for example, a shape having an ellipse and/or a corner) by operating the laser L itself. Meanwhile, when the stepped part 53 is provided in the lid-shaped exterior member 52, typically, the battery is irradiated with the laser L from the lateral direction of the battery. Consequently, the circular battery can be efficiently produced by rotating the battery itself while fixing the irradiation position of the laser L. The laser L to unevenly impinges on the corners or the like of the deformed battery, whereby the deformed battery may not be easily manufactured.

Due to the presence of the stepped part 53, the respective positions of the end part 52b of one exterior member (for example, the lid-shaped exterior member 52) and the end surface 10b of the electrode assembly 10, which are disposed to face the inner surface of the other exterior member (for example, the inner surface 51a of the cup-shaped exterior member 51) can be shifted and disposed without being coaxially disposed as compared with the case where no stepped part is present. The inner surface of the exterior member means the surface of the exterior member directly facing the electrode assembly 10.

Consequently, when the welded part 20 is formed by irradiating the portion where the cup-shaped exterior member 51 and the lid-shaped exterior member 52 face each other with the laser L (specifically, a portion between a part of the stepped part 53 of one exterior member (for example, the cup-shaped exterior member 51) and 52b of the other exterior member (for example, the lid-shaped exterior member 52) facing each other is irradiated with the laser L), the position of the irradiation region of the laser L can be shifted from the position of the end surface 10b of the electrode assembly 10.

Furthermore, as described above, the portion where the cup-shaped exterior member 51 and the lid-shaped exterior member 52 face each other is irradiated with the laser L to form the welded part 20. By the irradiation of the laser L, the welded part 20 can be provided or formed so as to include a part of the stepped part 53 provided at the end part of at least one exterior member and the end part of the other exterior member. The term "part of the stepped part" as used herein refers to a portion that contributes as a component of the welded part. The end part of the exterior member is a portion including the main surfaces of the two facing exterior members and the end surface of the exterior member, and means a portion where the exterior member is melted by the irradiation heat of the laser L and contributes as a component of the welded part.

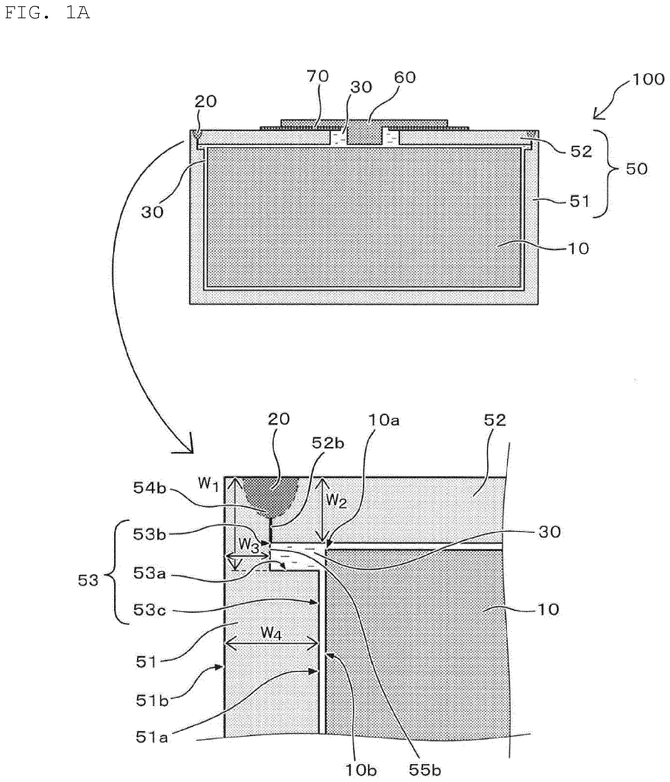

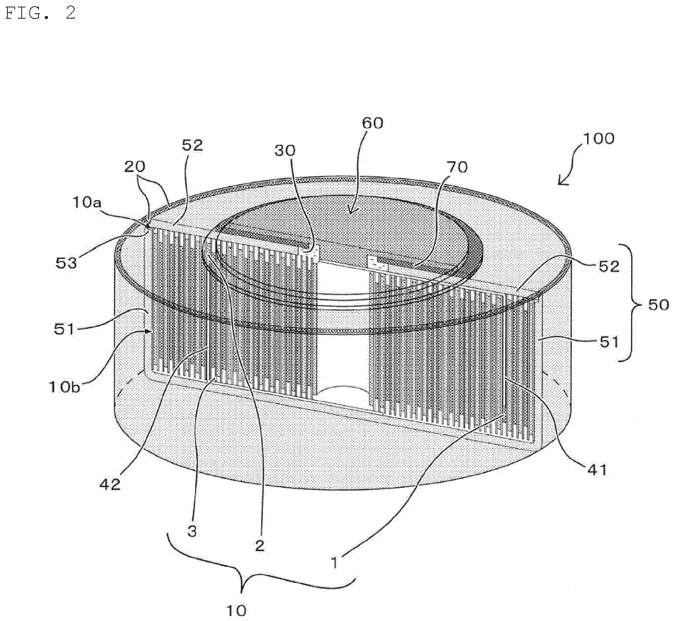

In particular, in an embodiment of the present invention, in the formation of the welded part 20, the irradiation of the laser L is performed in a state where the stepped surface 53a of the stepped part 53 and the other exterior member 52 are separated from each other. That is, the welded part 20 is formed by the irradiation of the laser L without bringing the stepped surface 53a of the stepped part 53 into contact with the end part 52b of the other exterior member 52. Such separation disposing makes it possible to provide a state where an exterior member having heat transfer characteristics is not present between the irradiation region of the laser L and the corner portion 10a of the electrode assembly 10. The state where the exterior member is not present means a state where a space in which an electrolytic solution 30 can be located is formed while being surrounded by the cup-shaped exterior member 51, the lid-shaped exterior member 52, and the electrode assembly 10 as shown in FIG. 1A or 2B.

In order to separate the stepped surface 53a and the other exterior member 52 from each other, it is preferable to use an electrode assembly in which an upper surface or a side surface of the electrode assembly 10 can be positioned between the stepped surface 53a of one exterior member and the inner surface of the other exterior member as the electrode assembly 10 provided in the cup-shaped exterior member 51. In other words, it is preferable to use an electrode assembly in which the upper surface or the side surface of the electrode assembly 10 can be positioned above the stepped surface 53a as the electrode assembly 10 provided in the cup-shaped exterior member 51. The use of the electrode assembly 10 is advantageous in that separation between the stepped surface 53a and the other exterior member 52 can be easily achieved.

As described above, it is possible to suitably avoid irradiation heat generated at the time of the irradiation of the laser L from propagating from the irradiation region of the laser L to the electrode assembly 10 side. As a result, it is possible to suitably avoid thermal damage to the electrode assembly 10 located inside the exterior body 50 due to the irradiation heat of the laser L. More specific matters will be described in the following column describing the configuration of the secondary battery according to an embodiment of the present invention obtained by the above manufacturing method.

### (Secondary Battery of The Present Invention)

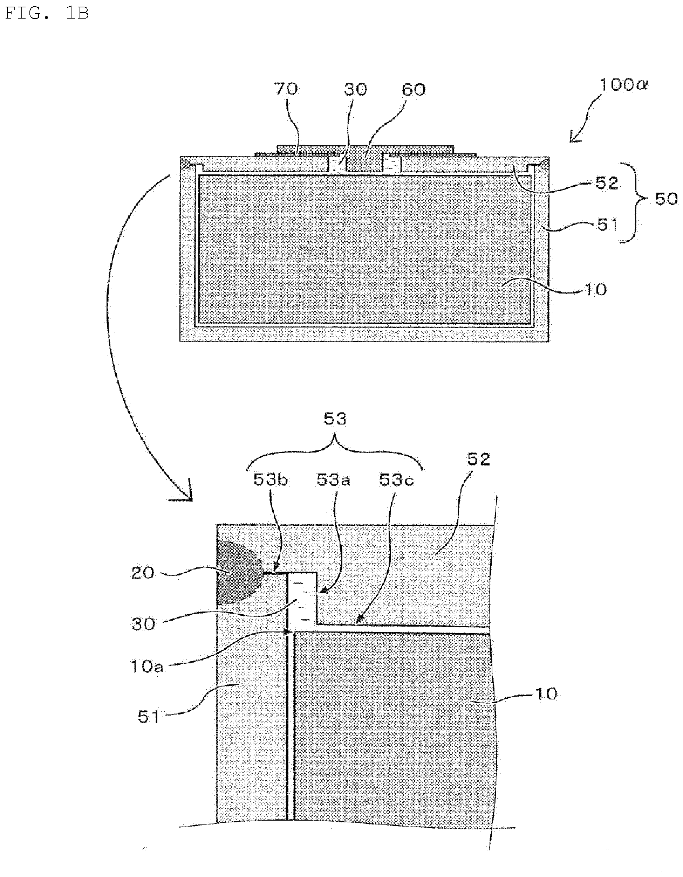

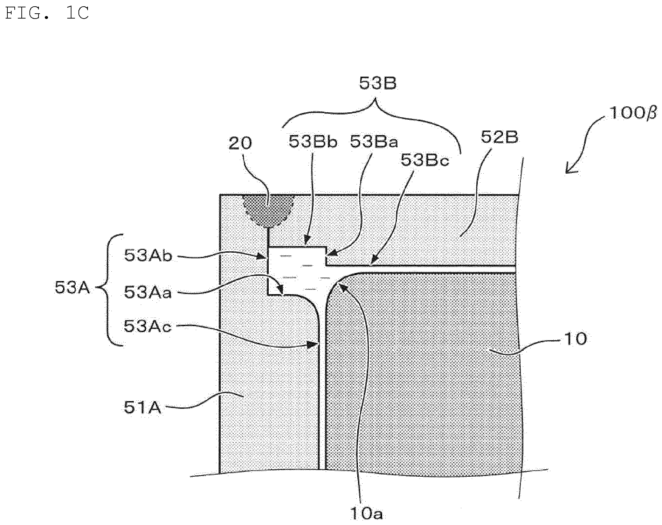

Hereinafter, a secondary battery according to an embodiment of the present invention obtained by the above manufacturing method will be specifically described (see FIGS. 1A to 1C and FIG. 2). FIG. 1A is a schematic sectional view showing the configuration of a secondary battery according to an embodiment of the present invention (a cup-shaped exterior member including a stepped part, a lid-shaped exterior member including a stepped part). FIG. 1B is a schematic sectional view showing the configuration of a secondary battery according to another embodiment of the present invention (a cup-shaped exterior member including no stepped part, a lid-shaped exterior member including no stepped part). FIG. 1C is a schematic sectional view showing the configuration of a secondary battery according to another embodiment of the present invention (a cup-shaped exterior member including a stepped part, a lid-shaped exterior member including a stepped part). FIG. 2 is a schematic perspective view showing the specific configuration of a secondary battery according to an embodiment of the present invention.

As shown in FIGS. 1A to 1C and FIG. 2, secondary batteries 100, 100α, and 100β according to an embodiment of the present invention obtained by the above-described manufacturing method include an electrode assembly 10 (corresponding to a battery element) and an exterior body 50 that houses the electrode assembly 10.

The secondary battery 100 according to an embodiment of the present invention is a coin-type secondary battery. The coin-type secondary battery typically has a substantially circular shape in plan view. The coin-type secondary battery does not need to be substantially circular in plan view, and may have a deformed shape including a straight portion in a part thereof (for example, a D shape in plan view). When the secondary battery has a substantially circular shape in plan view, the electrode assembly 10 and/or the exterior body 50 including the electrode assembly may also have a substantially circular shape in plan view. The "substantially circular shape (substantially circular)" as used herein is not limited to a perfect circular shape (that is, simply "circle" or "perfect circle"). The curvature of the arc of the substantially circular shape may be locally different, and the substantially circular shape may be, for example, a shape derived from a circle or a perfect circle such as an ellipse. The size of the coin-type secondary battery is typically small, and the thickness thereof is smaller than the diameter or width of the coin-type secondary battery. The "coin type" secondary battery is merely referred to as "coin type" because the appearance described above is an appearance such as "coin type" appearance. Therefore, the coin type secondary battery may be variously rephrased, depending on the appearance of a button battery, to a micro battery, a cylindrical battery, a planular battery, a flat battery, an even battery, or a cylinder-shaped battery or the like. When the battery has the shape and appearance as described above, the battery can be referred to as a "coin-type" secondary battery.

The exterior body 50 includes a cup-shaped exterior member 51 and a lid-shaped exterior member 52 connected to each other by a welded part 20, and an end part of at least one of the cup-shaped exterior member 51 and the lid-shaped exterior member 52 includes a stepped part 53, 53A, or 53B on an inner surface 51a. That is, in an embodiment of the present invention, only the cup-shaped exterior member 51 can include the stepped part 53 (see FIG. 1A), only the lid-shaped exterior member 52 can include the stepped part 53 (see FIG. 1B), or both the cup-shaped exterior member 51 and the lid-shaped exterior member 52 can include the stepped parts 53A and 53B (see FIG. 1C). The welded part 20 is provided so as to include or straddle a part of the stepped part of one exterior member (for example, the cup-shaped exterior member 51) and an end part 52b of the other exterior member (for example, the lid-shaped exterior member 52) .

Hereinafter, description will be given mainly based on an aspect shown in FIG. 1A, that is, an aspect in which only the cup-shaped exterior member 51 includes the stepped part 53. It is confirmed that the same concept can be applied to the aspect shown in FIG. 1B and the aspect shown in FIG. 1C.

First, as shown in FIG. 1A, in an embodiment of the present invention, the stepped part 53 includes a first extending surface 53b and a second extending surface 53c extending in substantially the same direction and having different heights from each other, and a stepped surface 53a connecting the two extending surfaces 53b and 53c.

From the viewpoint of suitable formation of the stepped part 53, a thickness dimension W₃ between the outer surface 51b of the cup-shaped exterior member 51 and the first extending surface 53b facing the outer surface 51b is smaller than a thickness dimension W₄ between the outer surface 51b of the cup-shaped exterior member 51 and the second extending surface 53c facing the outer surface 51b. That is, in the exterior member including the stepped part 53, the stepped surface 53a is formed so as to protrude by an amount obtained by subtracting the thickness dimension W₃ from the thickness dimension W₄. As described above, the stepped surface 53a protrudes by an amount obtained by subtracting the thickness dimension W₃ from the thickness dimension W₄, whereby the stepped surface 53a can also be referred to as a terrace portion or a terrace surface.

Although not particularly limited, the thickness dimension W₃ between the outer surface 51b of the cup-shaped exterior member 51 and the first extending surface 53b may be 25% or more and 75% or less of the thickness dimension W₄ between the outer surface 51b of the cup-shaped exterior member 51 and the second extending surface 53c. For example, the thickness dimension W₃ is preferably about 50% of the thickness dimension W₄ from the viewpoint of achieving both the maintaining of the overall strength of the cup-shaped exterior member 51 and the positioning of the end surface 10b of the electrode assembly 10 on an inner side with respect to the welded part 20, that is, the positioning of the welded part 20 on an outer side with respect to the end surface 10b of the electrode assembly 10.

In the aspect shown in FIG. 1A, the first extending surface 53b and the second extending surface 53c extend in substantially the same direction along the longitudinal direction of the cup-shaped exterior member 51, and the stepped surface 53a may be configured to extend in a direction substantially perpendicular to the extending direction of the two extending surfaces 53b and 53c in in sectional view. The stepped surface 53a can take a form such as a horizontal surface or an inclined surface in sectional view without limitation. The first extending surface 53b includes a portion facing the end part 52b of the other exterior member (for example, the lid-shaped exterior member 52). The second extending surface 53c is configured to face the end surface 10b of the electrode assembly 10. As shown in FIG. 1A, the stepped surface 53a, the first extending surface 53b, and the second extending surface 53c constitute a part of the inner surface 51a of the cup-shaped exterior member.

When the welded part 20 is formed by irradiating a portion between a part 54b of the stepped part 53 of one exterior member (for example, the cup-shaped exterior member 51) and the end part 52b of the other exterior member (for example, the lid-shaped exterior member 52) facing each other with the laser L, the presence of the stepped part 53 (specifically, the stepped surface 53a of the stepped part 53 to be described later) makes it possible to shift the position of the irradiation region of the laser L from the position of the end surface 10b of the electrode assembly 10. That is, in sectional view, the electrode assembly 10 located inside the exterior body 50 can be provided not coaxially with the welded part 20 but on the inner side with respect to the welded part 20. Specifically, the end surface 10b of the electrode assembly 10 can be positioned on an inner side with respect to the axis of the welded part 20. The term "inside" as used herein means a side of the exterior body on which the electrode assembly 10 is disposed. The "axis of the welded part 20" means the axis of the welded part 20 extending substantially parallel to the irradiation direction of the laser L.

Furthermore, an embodiment of the present invention has the following structural features.

Specifically, the stepped surface 53a of the stepped part 53 and the other exterior member 52 are separated from each other. That is, in sectional view, the length W₁ of the first extending surface 53b of the stepped part 53 is greater than the length W₂ of the end part 52b of the other exterior member (for example, the lid-shaped exterior member 52). The length W₂ of the end part 52b means the thickness of the other exterior member, and specifically means a distance between the inner surface 51a of the other exterior member and the outer surface 51b of the exterior member. From the viewpoint of suitably separating the stepped surface 53a and the other exterior member 52 from each other, it is preferable that the upper surface or the side surface of the electrode assembly 10 in the cup-shaped exterior member 51 can be positioned above the stepped surface 53a.

In this case, at least a part of the other portion 55b other than the part 54b (corresponding to the portion contributing as the component of the welded part 20) of (the first extending surface 53b of) the stepped part 53 of one exterior member and the end part 52b of the other exterior member are separated from each other. Specifically, the first extending surface 53b of the stepped part 53 provided at the end part of one exterior member (for example, the cup-shaped exterior member 51) includes a portion facing the end part 52b of the other exterior member (for example, the lid-shaped exterior member 52) and a portion not facing the end part 52b of the other exterior member (for example, the lid-shaped exterior member 52). That is, the first extending surface 53b includes a portion facing and in contact with the end part 52b of the other exterior member (for example, the lid-shaped exterior member 52) and a portion separated from the end part 52b of the other exterior member (for example, the lid-shaped exterior member 52) without facing the end part 52b. The first extending surface 53b faces the end surface 10b of the electrode assembly 10, and contributes to the formation of the non-presence region of the exterior member.

Consequently, the stepped surface of the stepped part 53 of the cup-shaped exterior member 51 and the lid-shaped exterior member 52 can be suitably separated from each other as a whole, whereby the exterior member having heat transfer characteristics is not present between the irradiation region of the laser L (corresponding to the formation region of the welded part 20) and the corner portion 10a of the electrode assembly 10.

From the above, the following effects can be obtained by the "shift disposing of the position of the irradiation region of the laser L from the position of the end surface 10b of the electrode assembly 10" and "the non-presence state of the exterior member having heat transfer characteristics between the irradiation region of the laser L and the corner portion of the electrode assembly 10". Specifically, it is possible to suitably avoid the irradiation heat generated at the time of the irradiation of the laser L from propagating from the irradiation region of the laser L (corresponding to the formation region of the welded part 20) to the electrode assembly 10 side. As a result, when one exterior body 50 is produced by forming the welded part 20 to integrate the two exterior members 51 and 52, it is possible to suitably avoid thermal damage to the electrode assembly 10 located inside the exterior body 50 due to the irradiation heat of the laser L.

In particular, in the aspect shown in FIG. 1C, the stepped parts 53A and 53B are provided at the end parts of both the cup-shaped exterior member 51 and the lid-shaped exterior member 52. Therefore, as compared with the aspect shown in FIG. 1A (the aspect in which only the cup-shaped exterior member 51 includes the stepped part 53) and the aspect shown in FIG. 1B (the aspect in which only the lid-shaped exterior member 52 includes the stepped part 53), the non-presence region of the exterior member having heat transfer characteristics between the welded part 20 (corresponding to the irradiation region of the laser L) and the corner portion 10a of the electrode assembly 10 can be expanded. Therefore, it is possible to more suitably avoid the irradiation heat generated at the time of the irradiation of the laser L from propagating from the irradiation region of the laser L (corresponding to the formation region of the welded part 20) to the electrode assembly 10 side. As a result, when one exterior body 50 is produced, it is possible to more suitably avoid thermal damage to the electrode assembly 10 located inside the exterior body 50 due to the irradiation heat of the laser L.

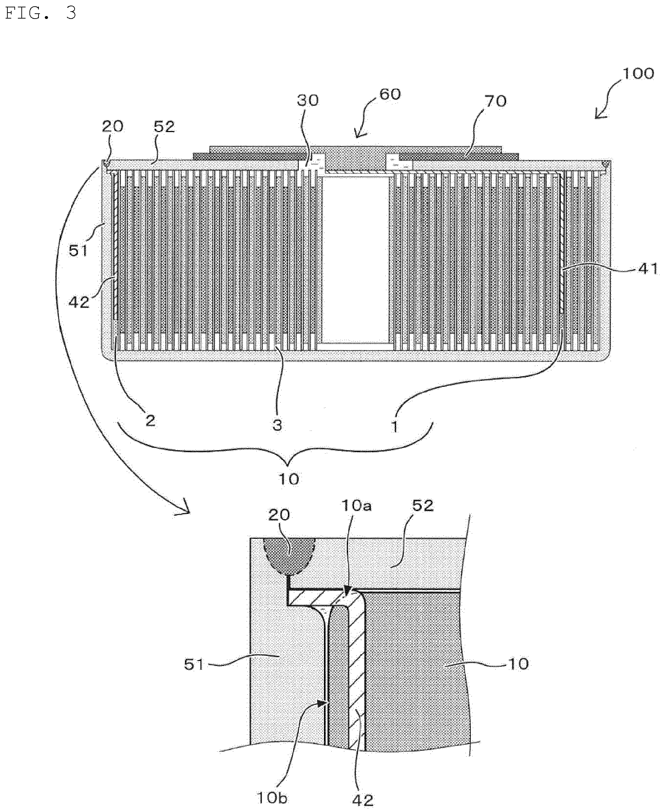

The secondary battery 100 according to an embodiment of the present invention includes a portion where the exterior members 51 and 52 are not present between the formation region of the welded part 20 (corresponding to the irradiation region of the laser) and the corner portion 10a of the electrode assembly 10. Therefore, the portion where the exterior members 51 and 52 are not present can be effectively used as follows (see FIG. 3).

FIG. 3 is a schematic sectional view showing an aspect in which both a positive electrode tab and a negative electrode tab are extended to a lid-shaped exterior member side. As shown in FIG. 3, when the electrode assembly 10 is a wound type electrode assembly as an example, a current collecting tab (for example, a positive electrode current collecting tab 41) of one of the positive electrode and the negative electrode can be configured to be connected to an external connection terminal 60 which is provided on the lid-shaped exterior member 52 side and is electrically separated from the exterior member 52 by an insulating member 70. In this case, the portion where the exterior members 51 and 52 are not present is present as described above, whereby a current collecting tab (for example, a negative electrode current collecting tab 42) of the other of the positive electrode and the negative electrode can be configured to be connected to the lid-shaped exterior member 52.

The material of the insulating material is not particularly limited as long as it exhibits insulating properties and "bondability". For example, an insulating bonding material may contain a thermoplastic resin. By way of only one specific example, the insulating bonding material may contain polyolefins such as polyethylene and/or polypropylene.

Consequently, as compared with the case where the current collecting tab (for example, the positive electrode current collecting tab 41) of one of the positive electrode and the negative electrode is configured to be provided on the lid-shaped exterior member 52 side and to be connected to the external connection terminal 60, and the current collecting tab (for example, the negative electrode current collecting tab 42) of the other of the positive electrode and the negative electrode is configured to be connected to the cup-shaped exterior member 51, the positive electrode current collecting tab and the negative electrode current collecting tab can be disposed not on both the upper side and the lower side but on the upper side (one side) of the electrode assembly 10.

That is, both the positive electrode current collecting tab 41 and the negative electrode current collecting tab 42 can be extended to the lid-shaped exterior member 52 side. As a result, the area of the negative electrode can be increased, and when the electrode assembly 10 is a wound type electrode assembly, the degree of freedom in designing the battery can be improved, and the overall size of the battery can be reduced.

In the above description, the case where the electrode assembly 10 is a wound type electrode assembly is taken as an example, but the present invention is not limited thereto, and the electrode assembly 10 may be a stacked type. In this case, a positive electrode-side current collecting tab bonded body is formed by bonding the positive electrode current collecting tabs extending from the plurality of positive electrodes 1 of the electrode assembly 10 to each other. For example, the positive electrode-side current collecting tab bonded body is bent and positioned on the upper surface of the electrode assembly 10, to connect the positive electrode-side current collecting tab bonded body to the external connection terminal 60 insulated from the exterior body 50.

Meanwhile, the negative electrode current collecting tabs extending from the plurality of negative electrodes 2 of the electrode assembly 10 are bonded to each other to form a negative electrode-side current collecting tab bonded body. The negative electrode-side current collecting tab bonded body of the electrode assembly 10 is bent so as to be folded back and positioned on the upper surface of the electrode assembly 10 as with the positive electrode to bring the negative electrode-side current collecting tab bonded body and the exterior body 50 (specifically, the lid-shaped exterior member 52) into contact with each other.

Consequently, the positive electrode-side and negative electrode-side current collecting tab bonded bodies can be disposed not on both the upper side and the lower side but on the upper side (one side) of the electrode assembly 10, as compared with the case where the current collecting tab bonded body (for example, the positive electrode-side current collecting tab bonded body) of one of the positive electrode and the negative electrode is configured to be provided on the lid-shaped exterior member 52 side to be connected to the external connection terminal 60, and the current collecting tab bonded body (for example, the negative electrode-side current collecting tab bonded body) of the other of the positive electrode and the negative electrode is configured to be connected to the cup-shaped exterior member 51.

That is, both the positive electrode-side current collecting tab bonded body and the negative electrode-side current collecting tab bonded body can be extended to the lid-shaped exterior member 52 side. As a result, the area of the negative electrode can be increased, and even when the electrode assembly 10 is a stacked type, the degree of freedom in designing the battery can be improved, and the overall size of the battery can be reduced.

Furthermore, as described above, the secondary battery 100 according to an embodiment of the present invention includes a portion where the exterior members 51 and 52 are not present between the formation region of the welded part 20 (corresponding to the irradiation region of the laser) and the corner portion 10a of the electrode assembly 10. Therefore, the portion where the exterior members 51 and 52 are not present can be effectively used as follows.

Specifically, as described above, in the method for manufacturing a secondary battery according to an embodiment of the present invention, the lid-shaped exterior member 52 is provided such that the lid-shaped exterior member 52 directly faces the inner surface 51a of the cup-shaped exterior member 51 after the electrolytic solution is injected. Specifically, the lid-shaped exterior member 52 is provided such that the end part 52b of the other exterior member (for example, the lid-shaped exterior member 52) directly faces the first extending surface 53b. Specifically, the lid-shaped exterior member 52 is provided so as to seal the cavity of the cup-shaped exterior member 51 with the lid-shaped exterior member 52. In this regard, when the lid-shaped exterior member 52 is provided in a state where the electrolytic solution is injected, the electrolytic solution may slightly overflow in some cases.

However, there is a portion where the exterior members 51 and 52 are not present between the formation region of the welded part 20 and the corner portion 10a of the electrode assembly 10, whereby the portion where the exterior members 51 and 52 are not present can also be filled with the electrolytic solution. Consequently, the overflow of the electrolytic solution can be suppressed as compared with the conventional case where the exterior member is also present between the formation region of the welded part 20 and the corner portion 10a of the electrode assembly 10. This makes it possible to efficiently use the electrolytic solution.

When an electrolytic solution is also present in the exterior body 50 in addition to the electrode assembly 10, the portion where the exterior members 51 and 52 are not present can also be filled with the electrolytic solution, so that the injection amount of the electrolytic solution can be increased as compared with the former case where the exterior member is also present between the formation region of the welded part 20 and the corner portion 10a of the electrode assembly 10. Consequently, the assistance of movement of metal ions in the battery reaction can be further improved.

### (Preferred Aspect of The Present Invention)

The secondary battery 100 according to an embodiment of the present invention preferably adopts the following aspect.

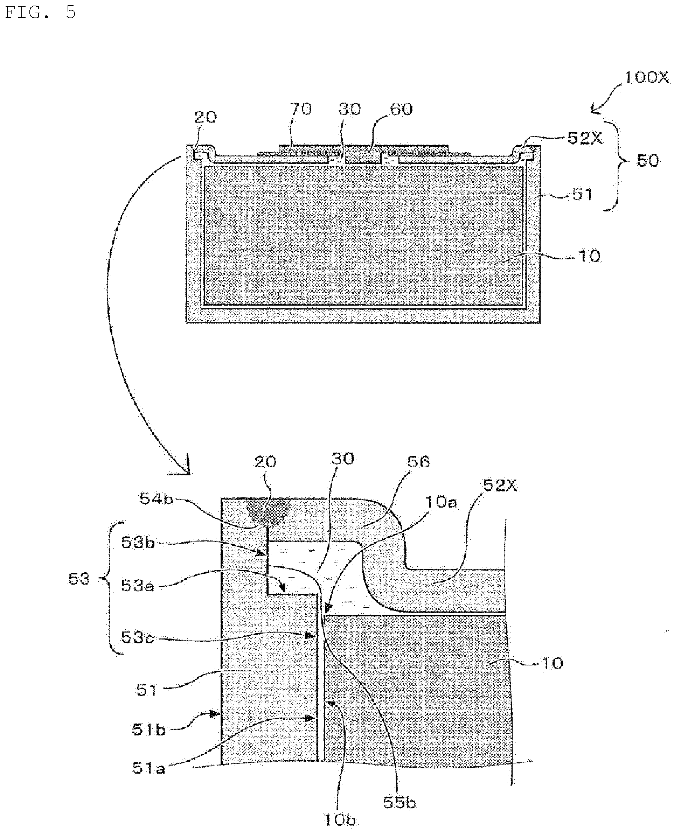

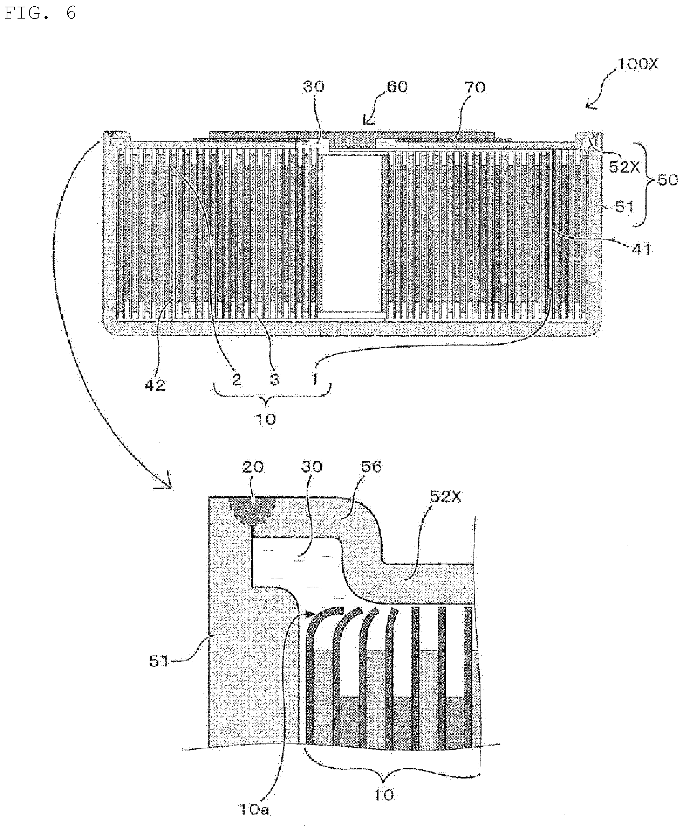

In an aspect, in sectional view, the other exterior member (for example, a lid-shaped exterior member 52X) preferably includes a bent portion 56 bent outward at an end part (see FIGS. 5 and 6). FIG. 5 is a schematic sectional view showing the configuration of a secondary battery according to another embodiment of the present invention. FIG. 6 is a schematic sectional view showing the specific configuration of a secondary battery according to another embodiment of the present invention. It is preferable that the end part of the other exterior member includes two or more bent portions. Specifically, when the end part of the other exterior member includes a bent portion 56 bent outward, the end part preferably includes two or more bent portions such that the end part of the other exterior member finally abuts on the first extending surface 53b of the stepped part.

In this aspect, when the case where the other exterior member is the lid-shaped exterior member 52X is taken as an example, the bent portion 56 bent outward is present at an end part of the lid-shaped exterior member 52X. Therefore, as a whole, as compared with the aspects shown in FIGS. 1A to 1C, a part of the stepped part 53 of the cup-shaped exterior member 51 can be more largely separated from the lid-shaped exterior member 52X. Therefore, as compared with the aspects shown in FIGS. 1A to 1C, the range in which the exterior member having heat transfer characteristics is not present between the irradiation region of the laser L and the corner portion 10a of the electrode assembly 10 can be further "expanded".

Consequently, as compared with the aspects shown in FIGS. 1A to 1C, it is possible to more suitably avoid the irradiation heat generated at the time of irradiation with the laser L from propagating from the irradiation region (corresponding to the formation region of the welded part 20) of the laser L to the electrode assembly 10 side. As a result, when one exterior body 50 is produced by forming the welded part 20 to integrate the two exterior members 51 and 52X, it is possible to more suitably avoid thermal damage to the electrode assembly 10 located inside the exterior body 50 due to the irradiation heat of the laser L.

The bent portion 56 is preferably provided so as to be separated from the corner portion 10a of the electrode assembly 10 along the extending direction of the main surface of the exterior member (for example, the lid-shaped exterior member 52). Furthermore, the bent portion is preferably provided so as to be separated from the portion in which the welded part 20 is formed along the extending direction of the main surface of the exterior member (for example, the lid-shaped exterior member 52). Consequently, the region where the exterior member is not present can be further expanded, and the irradiation heat can be further avoided from propagating to the electrode assembly 10.

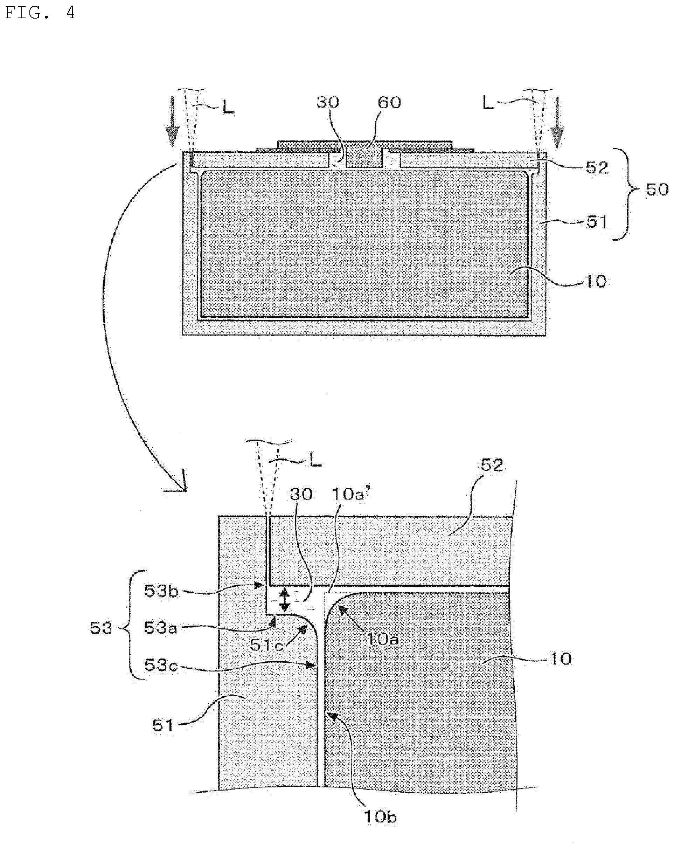

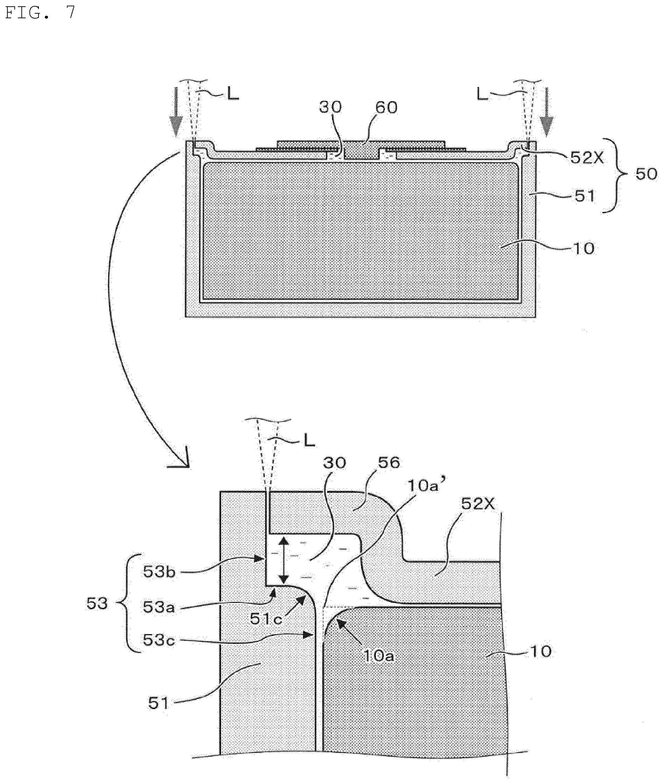

In an aspect, the corner portion 10a of the electrode assembly 10, which may have the shortest distance to the formation region of the welded part 20, preferably has not a substantially right angle shape shown in FIGS. 1A to 1C but a curved shape as shown in FIGS. 4 and 7. That is, the corner portion 10a of the electrode assembly 10 preferably has an R shape. FIG. 4 is a schematic sectional view showing the preferred configuration of a secondary battery according to an embodiment of the present invention. FIG. 7 is a schematic sectional view showing the preferred configuration of a secondary battery according to another embodiment of the present invention.

Specifically, the corner portion 10a of the electrode assembly 10 is preferably positioned on an inner side with respect to a corner portion 10a' in a virtual outline (corresponding to a broken line portion in FIGS. 4 and 7) in the case of the substantially right angle shape. Consequently, a distance between the irradiation region of the laser L (corresponding to the formation region of the welded part 20) and the curved corner portion 10a of the electrode assembly 10 can be made relatively longer than that in the case of the substantially right angle shape.

As a result, it is possible to more suitably avoid the irradiation heat of the laser L from propagating from the irradiation region of the laser L (corresponding to the formation region of the welded part 20) to the electrode assembly 10 side. As a result, it is possible to more suitably avoid thermal damage to the electrode assembly 10 inside the exterior body 50 due to the irradiation heat of the laser L.

In particular, the aspect shown in FIG. 7 is obtained by further combining an idea of forming the corner portion 10a of the electrode assembly 10 into a curved shape with an idea shown in FIG. 5 "the end part of the lid-shaped exterior member 52X is formed into the bent portion 56 bent outward" in sectional view. According to the aspect shown in FIG. 7, the bent portion 56 is bent outward, which makes it possible to further "expand" the range in which the exterior member having heat transfer characteristics is not present between the formation region of the welded part 20 (corresponding to the irradiation region of the laser L) and the corner portion 10a of the electrode assembly 10. In addition, the distance between the formation region of the welded part 20 and the curved corner portion 10a of the electrode assembly 10 can be made relatively longer than that in the case where the corner portion 10a of the electrode assembly 10 has a substantially right angle shape.

Consequently, as compared with the aspect shown in FIG. 5, it is possible to more suitably avoid the irradiation heat generated at the time of irradiation with the laser L from propagating from the irradiation region (corresponding to the formation region of the welded part 20) of the laser L to the electrode assembly 10 side. As a result, when one exterior body 50 is produced by forming the welded part 20 to integrate the two exterior members 51 and 52X, it is possible to still more suitably avoid thermal damage to the electrode assembly 10 located inside the exterior body 50 due to the irradiation heat of the laser L.

Furthermore, in both of the aspect shown in FIG. 4 and the aspect shown in FIG. 7, the one exterior member (for example, the cup-shaped exterior member 51) including the stepped part 53 is made of a metal member, whereby the irradiation heat of the laser L may be heat-transferred and finally propagate to the electrode assembly 10 side. Therefore, in an aspect, from the viewpoint of avoiding the irradiation heat from propagating from the formation region of the stepped part 53 to the electrode assembly 10 side, a corner portion 51c formed between the stepped surface 53a which is a component of the stepped part 53 and the second extending surface 53c extending in a direction substantially perpendicular to the stepped surface 53a also has preferably a curved shape. That is, the corner portion 51c preferably has an R shape.

As compared with the case where the corner portion 51c includes a right angle portion (for example, FIG. 1A), the corner portion 51c can have a shape other than a curved shape as long as the corner portion has a structure in which the propagation of the irradiation heat is relatively easily avoided. For example, the corner portion 51c can have an inclined surface or a surface continuous in a stepwise manner in sectional view. Consequently, the electrode assembly 10 is positioned on a more distal side from the corner portion 51c, whereby the irradiation heat is less likely to propagate to the electrode assembly 10.

To a corner portion (for example, FIG. 8C) between the end surface of the end part 52b of the other exterior member and the inner surface 52a of the other exterior member, a curved shape or the like that can be applied to the corner portion 51c is preferably applied, from the viewpoint of expanding the region where the exterior member is not present. For example, in FIG. 1A, a corner portion between the end surface of the end part 52b of the lid-shaped exterior member and the inner surface 52a of the lid-shaped exterior member includes a right angle portion, but a curved shape or the like that can be applied to the corner portion 51c to the corner portion is preferably applied.

The exterior member used in an embodiment of the present invention preferably has a non-laminated configuration. That is, each of the two exterior members does not have a laminated structure, and is not, for example, a laminate member of metal sheet/fusion layer/protective layer. While the laminated configuration usually includes a resin layer, the exterior member having the non-laminated configuration does not include such a resin layer. Preferably, the two exterior members include a single metal member. For example, each of the two exterior members may be a single member made of a metal such as stainless steel (SUS) or aluminum.

The term "metal single member" as used herein means that the exterior body does not have a so-called laminated configuration in a broad sense, and means that each of the two exterior members is a member substantially composed only of a metal in a narrow sense. Therefore, if the member is made of substantially only a metal, the surface of the exterior member may be subjected to an appropriate surface treatment.

Each of the two exterior members may have a thickness of, for example, 20 um or more and 200 um or less as a metal member (particularly, a metal single member), and preferably has a thickness of 30 um or more and 150 um or less, and more preferably has a thickness of 40 um or more and 120 um or less.

Although the embodiments of the present invention have been described above, they are merely examples. Therefore, the present invention is not limited thereto, and those skilled in the art will readily understand that various aspects can be conceived.

### INDUSTRIAL APPLICABILITY

The secondary battery according to an embodiment of the present invention can be used in various fields in which electricity storage is assumed. Although the followings are merely examples, the secondary battery of the present invention can be used in the fields of electricity, information and communication fields where electricity and electronic devices and the like are used (for example, electricity and electronic device fields or mobile device fields including small electronic devices such as mobile phones, smart phones, laptop computers, digital cameras, activity meters, arm computers, electronic papers, RFID tags, card type electronic money, and smart watches), domestic and small industrial applications (for example, the fields such as electric tools, golf carts, domestic robots, caregiving robots, and industrial robots), large industrial applications (for example, the fields such as forklifts, elevators, and harbor cranes), transportation system fields (for example, the fields such as hybrid vehicles, electric vehicles, buses, trains, electric assisted bicycles, and two-wheeled electric vehicles), electric power system applications (for example, the fields such as various power generation systems, load conditioners, smart grids, and home-installation type power storage systems), medical care applications (the medical care instrument fields such as earphone acoustic aids), medicinal applications (the fields such as dosing management systems), IoT fields, and space and deep sea applications (for example, the fields such as spacecraft and research submarines).

### DESCRIPTION OF REFERENCE SYMBOLS

1: Positive electrode
2: Negative electrode
3: Separator
5: Electrode configuration layer
10, 10': Electrode assembly
10a: Corner portion of electrode assembly
10b: End surface of electrode assembly
20, 20': Welded part
30, 30': Electrolytic solution
50, 50': Exterior body
51, 51A, 51': One exterior member (e.g., cup-shaped exterior member)
51a: Inner surface of one exterior member
51b: Outer surface of one exterior member
51c: Corner portion of one exterior member
52, 52X, 52B, 52': Other exterior member (e.g., lid-shaped exterior member)
52a: Inner surface of other exterior member (e.g., inner surface of lid-shaped exterior member)
52b: End part of other exterior member (e.g., end part of lid-shaped exterior member)
53, 53A, 53B: Stepped part
53a, 53Aa, 53Ba: Stepped surface of stepped part
53b, 53Ab, 53Bb: First extending surface of stepped part
53c, 53Ac, 53Bc: Second extending surface of stepped part
54b: Part of stepped part of one exterior member (corresponding to portion contributing as constructional element of welded portion)
55b: Other portion than part of stepped part of one exterior member (corresponding to portion contributing as constructional element of welded portion)
56: Bent portion
60, 60': External connection terminal
70, 70': Insulating member
100, 100α, 100β, 100X: Secondary battery
L, L': Light beam

## Claims

1. A secondary battery comprising:
an electrode assembly; and
an exterior body housing the electrode assembly,
wherein
the exterior body includes a cup-shaped exterior member and a lid-shaped exterior member connected to each other by a welded part,
an end part of at least one of the cup-shaped exterior member and the lid-shaped exterior member includes a stepped part on an inner surface,
the stepped part includes a first extending surface and a second extending surface extending in substantially the same direction and having different heights from each other, and a stepped surface connecting the two extending surfaces,
the welded part is provided so as to include a part of the stepped part provided at the end part of the at least one exterior member and the end part of the other exterior member, and
the stepped surface of the stepped part and the other exterior member are separated from each other.

2. The secondary battery according to claim 1, wherein the stepped surface of the stepped part and the end part of the other exterior member are not in contact with each other.

3. The secondary battery according to claim 1 or 2,
wherein an upper surface or a side surface of the electrode assembly is disposed above the stepped surface.

4. The secondary battery according to any one of claims 1 to 3, wherein the first extending surface of the stepped part provided at the end part of the one exterior member includes a portion facing the end part of the other exterior member and a portion not facing the end part of the other exterior member.

5. The secondary battery according to claim 4, wherein the first extending surface of the stepped part is longer than the end part of the other exterior member in sectional view.

6. The secondary battery according to any of claims 1 to 5, wherein the electrode assembly is provided on an inner side with respect to the welded part.

7. The secondary battery according to any one of claims 1 to 6, wherein a thickness dimension between an outer surface of the exterior member and the first extending surface facing the outer surface is smaller than a thickness dimension between the outer surface of the exterior member and the second extending surface facing the outer surface.

8. The secondary battery according to claim 7, wherein the thickness dimension between the outer surface of the exterior member and the first extending surface is 25% or more and 75% or less of the thickness dimension between the outer surface of the exterior member and the second extending surface.

9. The secondary battery according to any one of claims 1 to 8, wherein the exterior member includes a bent portion bent outward at an end part in sectional view.

10. The secondary battery according to any one of claims 1 to 9, wherein the electrode assembly includes a corner portion having a curved shape.

11. The secondary battery according to any one of claims 1 to 10, wherein a corner portion formed between the stepped surface of the stepped part and the second extending surface has a curved shape.

12. The secondary battery according to any one of claims 1 to 11, wherein the secondary battery is a coin-type secondary battery.

13. The secondary battery according to any one of claims 1 to 12, wherein the electrode assembly includes a positive electrode and a negative electrode capable of occluding and releasing lithium ions.

14. A method for manufacturing a secondary battery, the method comprising the steps of:
providing an electrode assembly in a cup-shaped exterior member;
injecting an electrolytic solution into the cup-shaped exterior member;
providing a lid-shaped exterior member so as to cover a cavity of the cup-shaped exterior member; and
irradiating a portion where the cup-shaped exterior member and the lid-shaped exterior member face each other with a laser to form a welded part,
wherein
at least one of the cup-shaped exterior member and the lid-shaped exterior member used includes a stepped part on an inner surface, and the stepped part includes a first extending surface and a second extending surface extending in substantially the same direction and having different heights from each other, and a stepped surface connecting the two extending surfaces; and
in the formation of the welded part, the portion is irradiated with the laser such that the stepped surface of the stepped part and the other exterior member are separated from each other.

15. The method for manufacturing a secondary battery according to claim 14, wherein the portion is irradiated with the laser without bringing the stepped surface of the stepped part into contact with an end part of the other exterior member to form the welded part.

16. The method for manufacturing a secondary battery according to claim 14 or 15, wherein the electrode assembly used has an upper surface or a side surface capable of being positioned above the stepped surface.

17. The method for manufacturing a secondary battery according to any one of claims 14 to 16, wherein the welded part is formed such that the first extending surface of the stepped part provided at the end part of the one exterior member includes a portion facing the end part of the other exterior member and a portion not facing the end part of the other exterior member.

18. The method for manufacturing a secondary battery according to claim 17, wherein the first extending surface of the stepped part is made longer than the end part of the other exterior member in sectional view.

19. The method for manufacturing a secondary battery according to any one of claims 14 to 18, wherein the electrode assembly is positioned on an inner side with respect to the welded part.

20. The method for manufacturing a secondary battery according to any one of claims 14 to 19, wherein, in the exterior member used, a thickness dimension between an outer surface of the exterior member and the first extending surface facing the outer surface is smaller than a thickness dimension between the outer surface of the exterior member and the second extending surface facing the outer surface.

21. The method for manufacturing a secondary battery according to claim 20, wherein, in the exterior member used, the thickness dimension between the outer surface of the exterior member and the first extending surface is 25% or more and 75% or less of the thickness dimension between the outer surface of the exterior member and the second extending surface.

22. The method for manufacturing a secondary battery according to any one of claims 14 to 21, wherein the exterior member used includes a bent portion bent outward at an end part in sectional view.

23. The method for manufacturing a secondary battery according to any one of claims 14 to 22, wherein the electrode assembly used includes a corner portion having a curved shape.

24. The method for manufacturing a secondary battery according to any one of claims 14 to 23, wherein, in the exterior member used, a corner portion formed between the stepped surface of the stepped part and the second extending surface has a curved shape.

25. The method for manufacturing a secondary battery according to any one of claims 14 to 24, wherein the secondary battery is a coin-type secondary battery.
